# EUROPEAN PATENT SPECIFICATION

(11) **EP 1 052 081 B1**
(45) Date of publication and mention of the grant of the patent: **05.11.2003**
(21) Application number: 99303471.9
(22) Date of filing: 04.05.1999
(51) Int. Cl.: B29C 65/18, B29C 65/22

(54) **Handy electric sealer with safety means**
Elektrische Heisssiegelvorrichtung mit Sicherheitsmitteln
Appareil électrique de soudure thermique comprenant des moyens de sécurete

(43) Date of publication of application: 15.11.2000
(73) Proprietor: Chang, Richard, Hsi Chih Town, Taipei Hsien, Taiwan (CN)
(72) Inventor: Chang, Richard, Hsi Chih Town, Taipei Hsien, Taiwan (CN)
(74) Representative: Stonehouse, Sidney William

(56) References cited:
- EP-A- 0 665 096
- EP-A- 0 900 643
- CH-A- 490 177
- DE-A- 2 041 542
- FR-A- 1 307 307
- GB-A- 2 186 227
- US-A- 3 867 226
- US-A- 5 142 123

## Description

### BACKGROUND OF THE INVENTION

The present invention relates to electric sealers, and more particularly to a handy electric sealer with safety means which controls the heating of the sealing mechanism, and stops the sealing mechanism from being triggered by an erroneous action.

A variety of electric sealers have been developed, and have appeared on the market. These conventional electric sealers are designed to be energized by AC power supply, or DC power supply. US Pat. No. 5,142,123 discloses an electric sealer energizable by internal battery set or external AC adapter. European Patent Specification No. EP 0 900 643 A1 discloses a handy electric sealer in accordance with the precharacterising clause of Claim 1 of this specification.

### SUMMARY OF THE INVENTION

It is one object of the present invention to provide an electric sealer which is handy, and safe in use. It is another object of the present invention to provide a handy electric sealer which has means to stop the sealing mechanism from being triggered by an erroneous action.

According to one embodiment of the present invention, the handy electric sealer comprises a casing, a sealing mechanism, a press bar, and safety means. The sealing mechanism comprises a heat insulative base, a heating wire, and two metal locating plates. The heat insulative base has a projecting block on the middle. The heating wire is mounted on the projecting block of the heat insulative base. The metal locating plates are fastened to the heat insulative base at two opposite sides to hold down the heating wire. A heat resisting cover sheet may be fastened to the projecting block of the heat insulative base, and covered on the heating wire. The number of the heating wire may be increased if desired. The heat insulative base of the sealing mechanism can be made of ceramics, bakelite, heat insulative plastics, or any material that resists heat as high as about 200°C. The press bar has one end namely the fixed end pivoted to the casing, and an opposite end namely the free end mounted with a heat insulative block. When the press bar is pressed down, the heat insulative block is lowered with the free end of the press bar and forced against the heat insulative base of the sealing mechanism to clamp the mouth of the plastic bag, enabling the mouth of the plastic bag to be sealed. The safety means controls the heating of the heating wire of the sealing mechanism, and stops the sealing mechanism from being triggered by an erroneous action. The safety means comprises a stop plate pivoted to the outside wall of the casing, and rotatable between a first position where the stop plate is suspended above the sealing mechanism to stop the heat insulative block of the press bar from contacting the projecting block of the heat insulative base of the sealing mechanism, and a second position where the stop plate is moved away from the sealing mechanism for enabling the heat insulative block of the press bar to be pressed against the projecting block of the heat insulative base of the sealing mechanism.

### BRIEF DESCRIPTION OF THE DRAWINGS

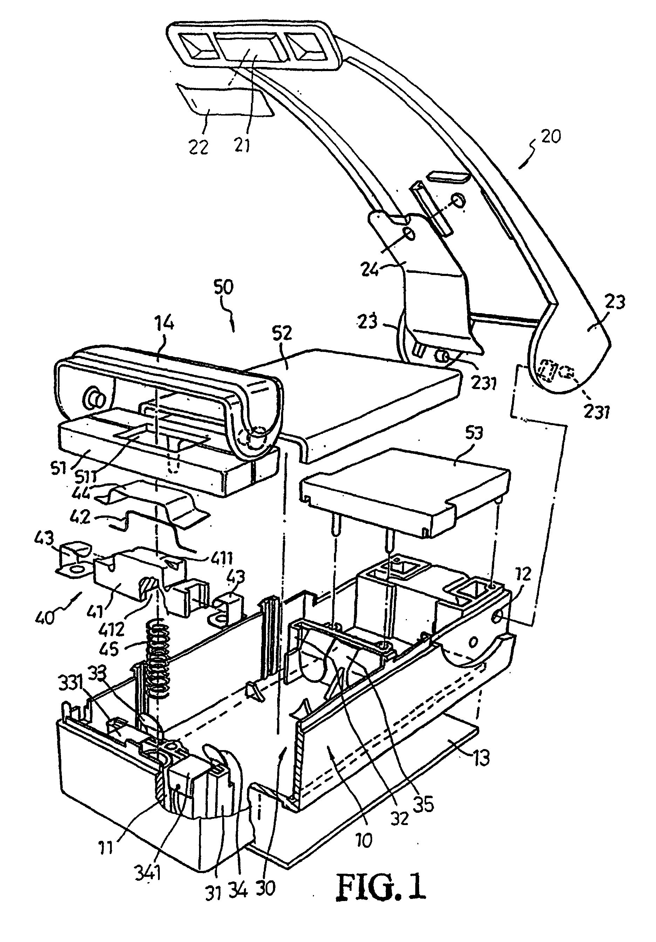

Figure 1 is an exploded view of a handy electric sealer according to a first embodiment of the present invention.

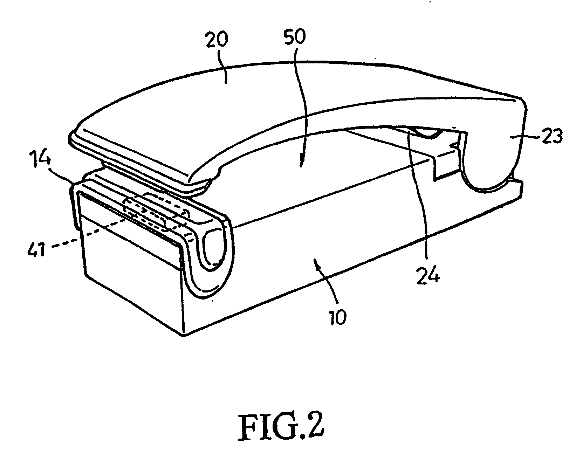

Figure 2 is a perspective view of the first embodiment of the present invention.
Figure 3 is a cross sectional view of the first embodiment of the present invention, showing the press bar not depressed.
Figure 4 is similar to Figure 3 but showing the press bar depressed.
Figure 5 is an exploded view of a handy electric sealer according to a second embodiment of the present invention.

### DETAILED DESCRIPTION OF THE PREFERRED EMBODIMENT

Referring to Figures from 1 through 4, a handy electric sealer in accordance with a first embodiment of the present invention is an electric sealer energizable by an internal battery set, comprised of a casing 10, a spring holder 11, a press bar 20, a battery chamber 30, and a sealing mechanism 40.

The battery chamber 30 is defined within the casing 10, comprising a front contact holder 31 transversely disposed at a front side, a rear contact holder 32 transversely disposed at a rear side, a pair of first metal contacts 33 and 34 bilaterally provided at the front contact holder 31, a pair of second metal contacts 35 bilaterally provided at the rear contact holder 32, and two horizontal metal contacts 331 and 341 respectively forwardly extended from the first metal contacts 33 and 34. According to this embodiment, the second metal contacts 35 are integral with each other. A battery set can then be installed in the battery chamber 30 between the front contact holder 31 and the rear contact holder 32 to provide DC power supply to the sealing mechanism 40. The spring holder 11 is mounted in casing 10 between the horizontal metal contacts 331 and 341.

The sealing mechanism 40 is mounted in the casting 10, comprising a heat insulative base 41, a heating wire 42, two metal locating plates 43, a heat resisting cover sheet 44, and a compression spring 45. The heat insulative base 41 comprises a flat projecting block 411 on the middle. The heating wire 42 is fastened to the projecting block 411 of the heat insulative base 41. The locating plates 43 are fastened to the heat insulative base 41 at two opposite sides to hold the heating wire 42 in place. The heat resisting cover sheet 44 is covered on the projecting block 411 and the heating wire 42 to protect the heating wire 42, and to provide a smooth surface. The heat resisting cover sheet 44 can be a meshed member made of Teflon-coated metal wire. The heat insulative base 41 further comprises a bottom hole 412. The compression spring 45 has a bottom end mounted in the spring holder 11, and a top end inserted into the bottom hole 412. Therefore, the sealing mechanism 40 is supported on the compression spring 45, and can be moved up and down relative to the casing 10.

The press bar 20 comprises a heat insulative block 21 at the bottom side of one end namely the front end thereof, a heat resisting cover sheet 22 covered on the heat insulative block 21, and a pair of lugs 23 bilaterally arranged in parallel at an opposite end namely the rear end thereof. The lugs 23 each have a pivot pin 231. The pivot pins 231 of the lugs 23 are respectively inserted into respective pivot holes 12 at the rear side of the casting 10 remote from the sealing mechanism 40. Therefore, the press bar 20 is coupled to the casing 20, and can be turned up and down about an axis relative to the casing 10. When the press bar 20 is turned downwards, the heat insulative block 21 is pressed on the projecting block 411 of the heat insulative base 41 of the sealing mechanism 40. The heat resisting cover sheet 22 is covered on the heat insulative block 21 to provide a smooth surface. The heat resisting cover sheet 22 can be a meshed member made of Teflon-coated metal wire. Further, a spring plate 24 is provided, having a fixed end fastened to the press bar 20 and a free end stopped at a part of the casing 10. The spring plate 24 imparts an upward pressure to the press bar 20, causing the press bar 20 to be maintained in an "opened" position where the heat insulative block 21 is kept away from the projecting block 411 of the heat insulative base 41 of the sealing mechanism 40.

A safety stop plate 14 is pivoted to the front side of the casing 10. When the safety heat sealer is not in use, the safety stop plate 14 is turned upwards and forced into the gap between the heat insulative block 21 of the press bar 20 and the projecting block 411 of the heat insulative base 41 of the sealing mechanism 40 to prohibit the heat insulative block 21 of the press bar 20 from contacting the sealing mechanism 40. When in use, the safety stop plate 14 is turned outwards and then downwards, enabling the heat insulative block 21 of the press bar 20 to be pressed against the projecting block 411 of the heat insulative base 41 of the sealing mechanism 40.

A cover 50 is covered on the casing 10 to protect the sealing mechanism 40 and the battery chamber 30. The cover 50 is comprised of a front cover plate 51, which covers the sealing mechanism 40, a battery cover plate 52, which covers the battery chamber 30, and a rear cover plate 53, which covers the rear part of the casing 10. The front cover 51 has an opening 511 through which the projecting block 411 of the heat insulative base 41 of the sealing mechanism 40 passes.

Further, a magnetic mounting plate 13 is fixedly provided at the back side (bottom side) of the casing 10. By means of the magnetic mounting plate 13, the handy electric sealer can be secured to a metal object for example the metal wall of a refrigerator by magnetic attraction.

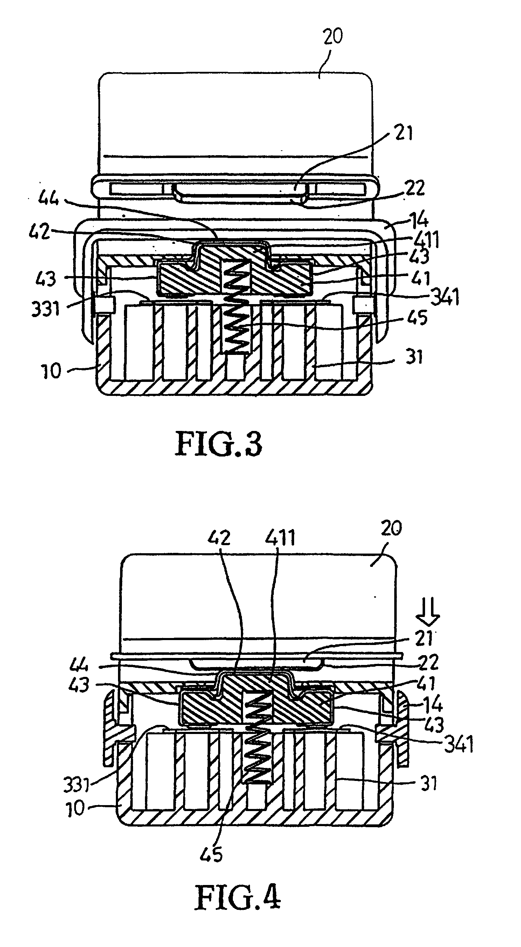

The operation of the first embodiment of the present invention is outlined hereinafter with reference to Figures 3 and 4 again. As illustrated in Figure 3, when the handy electric sealer is not operated, the metal locating plates 43 are kept away from the horizontal metal contacts 331 and 341, the heating wire 42 is disconnected from the DC power supply of the battery (which is installed in the battery chamber 30), and the safety stop plate 14 is stopped between the heat insulative block 21 of the press bar 20 and the projecting block 411 of the heat insulative base 41 of the sealing mechanism 40. Therefore, pressing the press bar 20 does not cause the sealing mechanism 40 to work. When in use, as illustrated in Figure 4, the safety stop plate 14 is turned away from the projecting block 411, then the press bar 20 is depressed to force the heat insulative block 21 against the heat insulative base 41 of the sealing mechanism 40, causing the metal locating plates 43 to be lowered with the heat insulative base 41 into contact with the horizontal metal contacts 331 and 341, and the heating wire 42 is electrically connected to start heat sealing operation.

When sealing the two thermoplastic flaps of an article, the thermoplastic flaps of the article are placed in between the heat insulative block 21 and the projecting block 411, then the press bar 20 is depressed to force the metal locating plates 43 into contact with the horizontal metal contacts 311 and 341. When the metal locating plates 43 touch the horizontal metal contacts 331 and 341, the heating wire 42 is turned on to produce heat, thereby causing the thermoplastic flaps of the article to be sealed. After sealing, the press bar 20 is released from the hand, enabling the heat insulative base 41 and the metal locating plates 43 to be moved upwardly away from the horizontal metal contacts 331 and 341 by the compression spring 45, and therefore battery power supply is cut off from the heating wire 42.

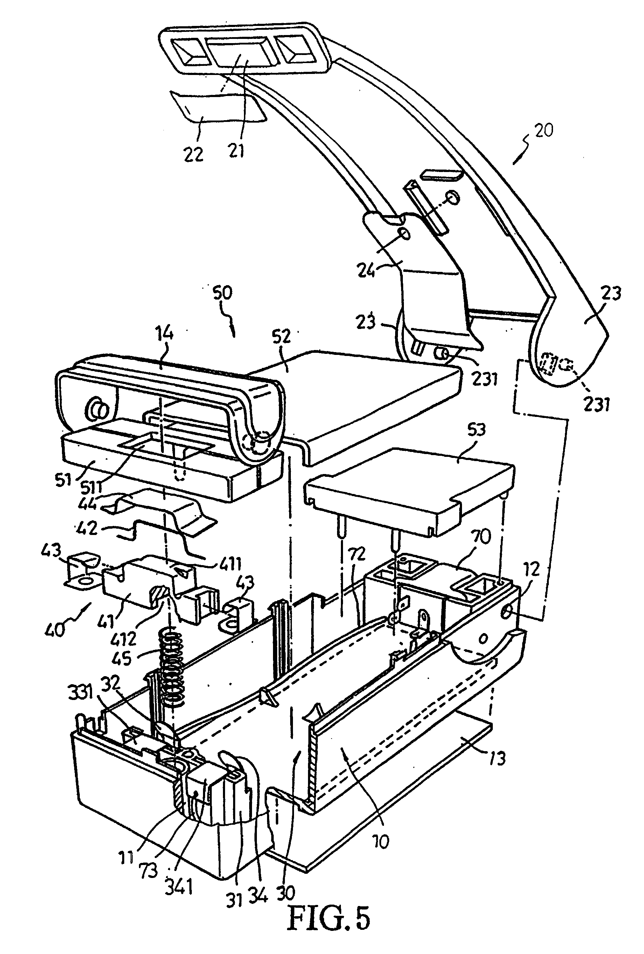

Figure 5 shows a handy electric sealer according to a second embodiment of the present invention. This embodiment is energizable by an external AC adapter. The structure and operation procedure of this second embodiment are similar to that of the aforesaid first embodiment with the exception of the arrangement of power supply. The second embodiment comprises a power socket 70 for receiving power supply from an AC outlet through an AC adapter. The power socket 70 has two opposite terminals respectively connected to the horizontal metal contacts 331 and 341 by electric wires 72 and 73. Because no battery is used, the aforesaid battery chamber can be eliminated from the casing 10. Therefore, the size of the casing 10 can be greatly reduced. Further, the safety stop plate 14 is pivoted to the outside wall of the casing 10 relative to the sealing mechanism 40 for safety control.

The design of arranging the sealing mechanism at the press bar can be used in any of a variety of handy electric sealers, including battery-operated electric sealers, AC electric sealers.

It is to be understood that the drawings are designed for purposes of illustration only, and are not intended as a definition of the limits and scope of the invention disclosed.

## Claims

1. A handy electric sealer comprising a casing (10) including a spring holder (11) and a power supply circuit having contacts (33, 34) mounted in the casing and connected, or connectable, to a power source, a sealing mechanism (40) mounted in said casing and comprising two metal locating plates (43), spring means (45), at least one heating wire (42) and a heat insulative base (41) having a projecting block (411) thereon, and a press bar (20) having a fixed end pivoted to a rear side of said casing and a free end provided with a heat insulative block (21) which presses on the projecting block (411) when said press bar (20) is turned downwards, said at least one heating wire (42) of said sealing mechanism (40) being mounted on the projecting block (411) of said heat insulative base (41), said metal locating plates (43) being fastened to said heat insulative base (41) at two opposite sides and connected to two opposite ends of each of said at least one heating wire (42), and said spring means being mounted in said spring holder (11) inside said casing (10) to support said heat insulative base (41) above said contacts (33, 34), and safety means being provided controlled to stop said at last one heating wire (42) from heating, **characterised in that** said safety means comprises a stop plate (14) pivoted to a front side of said casing (10), and rotatable between a first position where said stop plate (14) is suspended above said sealing mechanism (40) to stop said heat insulative block (21) of said press bar (20) from contacting the projecting block (411) of the heat insulative base (41) of said sealing mechanism (40), and a second position where said stop plate (14) is moved away from said sealing mechanism (40) for enabling said heat insulative block (21) of said press bar (20) to be pressed against the projecting block (411) of said heat insulative base (41) of said sealing mechanism (40).

2. A handy electric sealer according to claim 1 **characterised in that** said casing (10) comprises a battery chamber (30) holding a battery set and said spring holder (11), said battery chamber (30) comprising a front contact holder (31), a rear contact holder (32), a pair of first metal contacts (33, 34) mounted in said front contact holder (31) and separated from each other, a pair of second metal contacts (35) mounted in said rear contact holder (32) and connected together, and two horizontal metal contacts (331, 341) respectively connected to said first metal contacts (33, 34).

3. A handy electric sealer according to claim 1 or claim 2 **characterised in that** said casing (10) comprises a front contact holder (31), said spring holder (11) being disposed in front of said front contact holder, two horizontal metal contacts (331, 341) respectively mounted on said front contact holder (31), a power socket (70) for receiving external power supply and having two opposite terminals respectively connected to said horizontal metal contacts by a respective electric wire (72, 73).

## Patentansprüche

1. Ein handliches, elektrisches Verschweißgerät beinhaltet ein Gehäuse (10), das Folgendes enthält einen Federhalter (11) und einen Stromkreis für die Energieversorgung, welcher über Kontakte (33, 34) verfügt, die in dem Gehäuse angebracht und mit einer Energiequelle verbunden sind, oder mit ihr verbunden werden können, einen Verschweißmechanismus (40), der in dem besagten Gehäuse angebracht ist und über zwei Fixierplatten aus Metall (43), Federelement (45), mindestens einen Heizdraht (42) und einen nicht wärmeleitenden Sockel (41), auf dem sich ein hervorstehender Block (411) befindet, verfügt, und einen Druckarm (20), der ein fixiertes Ende hat, dass schwenkbar an einer hinteren Seite des besagten Gehäuses befestigt ist, sowie ein freies Ende, das mit einem nicht wärmeleitenden Block (21) versehen ist, welcher auf den hervorstehenden Block (411) drückt, wenn der besagte Druckarm (20) nach unten gelenkt wird, den besagten, mindestens in Einzahl vorhandenen, Heizdraht (42) des besagten Verschweißmechanismus (40), der auf dem hervorstehenden Block (411) des besagten nicht wärmeleitenden Sockels (41) angebracht ist, die besagten Fixierplatten aus Metall (43), die an zwei einander gegenüberliegenden Seiten an dem besagten, nicht wärmeleitenden Sockel (41) befestigt sind, und die mit zwei entgegengesetzten Enden von jedem der besagten, mindestens in Einzahl vorhandenen Heizdrähte (42) verbunden sind, und das besagte Federelement, das in dem besagten Federhalter (11) innerhalb des besagten Gehäuses (10) montiert ist, um den besagten, nicht wärmeleitenden Sockel (41) über den besagten Kontakten (33, 34) zu halten, und eine Sicherheitsvorrichtung, die bereitgestellt wird, um das Aufheizen des, mindestens in Einzahl vorhandenen, Heizdrahtes (42) kontrolliert zu unterbinden, was dadurch charakterisiert ist, dass die besagte Sicherheitsvorrichtung über eine Sperrplatte (14) verfügt, die schwenkbar an einer Vorderseite des besagten Gehäuses (10) befestigt ist, und hin und her wechseln kann, zwischen einer ersten Position, in welcher die besagte Sperrplatte (14) über dem besagten Verschweißmechanismus (40) aufgehängt ist, um so den nicht wärmeleitenden Block (21) des besagten Druckarmes (20) von der Berührung des hervorstehenden Blocks (411) des nicht wärmeleitenden Sockels (41) des besagten Verschweißmechanismus (40) abzuhalten, und einer zweiten Position, in welcher die besagte Sperrplatte (14) von dem besagten Verschweißmechanismus (40) fortbewegt wird, um so zu ermöglichen, dass der besagte, nicht wärmeleitende Block (21) des besagten Druckarms (20) an den hervorstehenden Block (411) des besagten, nicht wärmeleitenden Sockels (41) des besagten Verschweißmechanismus (40) gedrückt wird.

2. Ein handliches, elektrisches Verschweißgerät gemäß Anspruch 1, welches dadurch charakterisiert ist, dass das besagte Gehäuse (10) ein Batteriefach (30) beinhaltet, das ein Batterie-Set und den besagten Federhalter (11) beinhaltet, wobei das besagte Batteriefach (30) Folgendes beinhaltet, einen vorderen Kontakthalter (31), einen hinteren Kontakthalter (32), ein Paar erster Metallkontakte (33, 34), welche in dem besagten, vorderen Kontakthalter (31) montiert und voneinander getrennt sind, ein Paar zweiter Metallkontakte (35), welche in dem besagten, hinteren Kontakthalter (32) montiert und miteinander verbunden sind, sowie zwei horizontale Metallkontakte (331, 341), welche jeweils mit den besagten, ersten Metallkontakten (33, 34) verbunden sind.

3. Ein handliches, elektrisches Verschweißgerät gemäß Anspruch 1 oder Anspruch 2, welches dadurch charakterisiert ist, dass das besagte Gehäuse (10) Folgendes beinhaltet, einen vorderen Kontakthalter (31), den besagten Federhalter (11), welcher sich vor dem besagten, vorderen Kontakthalter befindet, zwei horizontale Metallkontakte (331, 341), welche jeweils auf dem besagten, vorderen Kontakthalter (31) montiert sind, sowie eine Netzsteckdose (70), für die Energiezufuhr von außen, welche zwei gegenüberliegende Anschlüsse hat, die jeweils über einen elektrischen Draht (72, 73) mit den besagten, horizontalen Kontakten verbunden sind.

## Revendications

1. Scelleuse électrique maniable comprenant un boîtier (10) comportant un porte-ressort (11) et un circuit d'alimentation électrique ayant des contacts (33, 34) montés dans le boîtier et reliés ou pouvant être reliés à une source d'alimentation, un mécanisme de scellage (40) monté dans ledit boîtier et comprenant deux plaques de fixation en métal (43), des moyens formant ressort (45), au moins un filament chauffant (42) et une base d'isolation thermique (41) sur laquelle se trouve un bloc en projection (411), et une barre de presse (20) ayant une extrémité fixe pivotant vers un côté arrière dudit boîtier, et une extrémité libre pourvue d'un bloc d'isolation thermique (21) qui appuie sur le bloc en projection (411) lorsque ladite barre de presse (20) est dirigée vers le bas, ledit au moins un filament chauffant (42) dudit mécanisme de scellage (40) étant monté sur le bloc en projection (411) de ladite base d'isolation thermique (41), lesdites plaques de fixation en métal (43) étant fixées à ladite base d'isolation thermique (41) au niveau des deux côtés opposés et reliés aux deux extrémités opposées de chacun au moins d'un dit filament chauffant (42), et lesdits moyens formant ressort étant montés dans ledit porte-ressort (11) à l'intérieur dudit boîtier (10) pour soutenir ladite base d'isolation thermique (41) au-dessus desdits contacts (33, 34), et des moyens de sécurité étant pourvus, commandés pour empêcher au moins un dit filament chauffant (42) de chauffer, **caractérisée en ce que** lesdits moyens de sécurité comprennent une plaque d'arrêt (14) pivotant vers un côté avant dudit boîtier (10), et pouvant être actionnée par rotation entre une première position où ladite plaque d'arrêt (14) est suspendue au-dessus dudit mécanisme de scellage (40) pour empêcher ledit bloc d'isolation thermique (21) de ladite barre de presse (20) d'entrer en contact avec le bloc en projection (411) de la base d'isolation thermique (41) dudit mécanisme de scellage (40), et une deuxième position où ladite plaque d'arrêt (14) est écartée dudit mécanisme de scellage (40) pour permettre au dit bloc d'isolation thermique (21) de ladite barre de presse (20) d'être appuyée contre le bloc en projection (411) de ladite base d'isolation thermique (41) dudit mécanisme de scellage (40).

2. Scelleuse électrique maniable selon la revendication 1, **caractérisée en ce que** ledit boîtier (10) comprend un réceptacle à piles (30) maintenant un jeu de piles et ledit porte-ressort (11), ledit réceptacle à piles (30) comprenant un porte-contacts avant (31), un porte-contacts arrière (32), une paire de premiers contacts en métal (33, 34) montés dans ledit porte-contacts avant (31) et séparés l'un de l'autre, une paire de seconds contacts en métal (35) montés dans ledit porte-contacts arrière (32) et reliés ensemble, et deux contacts horizontaux en métal (331, 341) reliés respectivement auxdits premiers contacts en métal (33, 34).

3. Scelleuse électrique maniable selon la revendication 1 ou la revendication 2, **caractérisée en ce que** ledit boîtier (10) comprend un porte-contacts avant (31), ledit porte-ressort (11) étant disposé devant ledit porte-contacts avant, deux contacts horizontaux en métal (331, 341) montés respectivement sur ledit porte-contacts avant (31), une prise de courant (70) destinée à recevoir une alimentation externe et ayant deux bornes opposées reliées respectivement auxdits contacts horizontaux en métal par un fil électrique respectif (72, 73).
